# EUROPÄISCHE PATENTANMELDUNG

(11) **EP 0 523 659 A1**
(43) Veröffentlichungstag der Anmeldung: **20.01.1993**
(21) Anmeldenummer: 92112079.6
(22) Anmeldetag: 15.07.1992
(51) Int. Cl.: B60K 13/02, B62D 25/12, F02M 35/16

(54) **Abdeckung für einen Motorraum**

(30) Priorität: 15.07.1991 DE 4123358; 15.07.1991 DE 4123360
(71) Anmelder: Klöckner-Humboldt-Deutz Aktiengesellschaft, D-51149 Köln (DE)
(72) Erfinder: Bresgen, Horst, Dipl.-Ing., W-5020 Frechen 4 (DE); Ippen, Heiko, Dipl.-Ing., W-5000 Köln 90 (DE)

(57) **Zusammenfassung**

2.1 Zur Lösung der Aufgabe, eine Abdeckung für einen Motor bereitzustellen, die die Zufuhr von ausreichend kalter Verbrennungsluft gewährleistet, wird vorgeschlagen, auf der Motorhaube bzw. auf einem Seitenteil der Abdeckung einen Kanal als separates Bauteil anzuordnen bzw. die Motorhaube oder das Seitenteil hohl auszubilden.

## Beschreibung

Die Erfindung betrifft eine Abdeckung für einen Motor nach dem Oberbegriff der unabhängigen Patentansprüche.

Aus der DE 39 01 658 ist eine Motorhaube bekannt, die zur Führung von Motoransaugluft hohl ausgebildet ist. Der in der Motorhaube integrierte Hohlraum erstreckt sich im wesentlichen über die gesamte Länge und Breite der Motorhaube. Der Hohlraum ist durch Schottwände in zwei Längskanäle unterteilt. Ein Längskanal dient der Führung der Motoransaugluft, während der andere zu einer in diesem Längskanal eingebauten Heiz- bzw. Kühleinrichtung für den Innenraum der Fahrerkabine führt. Darüber hinaus ist ein weiterer durch Schottwände gebildeter Längskanal bekannt, der elektrische Kabel aufnimmt. Diese bekannte Motorhaube hat den Nachteil, daß sie aufwendig und kostenintensiv zu fertigen ist. Zum einen ist die Motorhaube hohl auszubilden, zum anderen müssen die Schottwände in den Hohlraum eingebracht werden. Darüber hinaus hat die bekannte Motorhaube den Nachteil, daß die durch die Schottwände gebildeten Längskanäle im wesentlichen oberhalb des Antriebsmotores des Fahrzeuges angeordnet sind. Dadurch kommt es zu einer unerwünschten Aufheizung der Ansaugluft. Außerdem ist die Motorhaube als Ersatzteil ebenfalls kostenintensiv.

Der Erfindung liegt die Aufgabe zugrunde, eine Abdeckung für einen Motor bereitzustellen, die die Zufuhr von ausreichend kalter Verbrennungsluft gewährleistet und die genannten Nachteile vermeidet.

Diese Aufgabewird durch die in den jeweiligen kennzeichnenden Teilen der unabhängigen Patentansprüche angegebenen Merkmale gelöst.

Erfindungsgemäß ist der Kanal zur Zuführung von Verbrennungsluft als separates Bauteil ausgebildet, das mit der Motorhaube oder einem Teil der Motorhaube verbunden ist. Diese Anordnung hat den Vorteil, daß die verwendete Motorhaube, insbesondere eine Motorhaube ausder Serienfertigung, mit dem separaten Kanal versehen wird, so daß eine einfache und kostengünstige Fertigung der Motorhaube gegeben ist. Darüber hinaus ist durch die erfindungsgemäße Anordnung der Vorteil gegeben, daß sich die in dem Kanal zugeführte Luft nicht übermäßig aufheizen kann, da der Kanal nicht in direkter Verbindung mit der Motorhaube steht. Somit ist die Zufuhr von ausreichend kalter Verbrennungsluft gewährleistet.

In Weiterbildung der Erfindung ist der Kanal auf der Motorhaube angeordnet. Dadurch ist die Möglichkeit gegeben, eine insbesondere serienmäßig hergestellte Motorhaube mit dem separat angeordneten Kanal nachzurüsten.

In Weiterbildung der Erfindung ist der Kanal in der Motorhaube eingelassen. In einer besonderen Ausgestaltung bilden die Oberseite der Motorhaube und die Oberseite des Kanals eine geschlossene Oberfläche. Dies hat den Vorteil, daß die derart ausgebildete Motorhaube leicht zu reinigen ist und ein gefälliges Erscheinungsbild aufweist. Darüber hinaus ist aufgrund dieser Ausbildung ein Versteifungseffekt und eine zusätzliche Dämmung des Motorgeräusches gegeben.

In Weiterbildung der Erfindung weist der Kanal gegenüber der Motorhaube eine Isolierung auf. Neben dem Effekt, daß eine zusätzliche Geräuschdämmung des Motorgeräusches erreicht wird, ist dadurch eine zusätzliche Reduzierung der Aufheizung der Verbrennungluft aufgrund der Motorumgebungstemperatur gegeben.

In Weiterbildung der Erfindung erstreckt sich der Kanal zumindest über eine Teilbreite der Motorhaube. Dadurch ist die Möglichkeit gegeben, den Kanalquerschnitt den konstruktiven Gegebenheiten der Motorhaube und dem vorhandenen Raumangebot anzupassen. Bei einer entsprechend großen Ausdehnung des Kanals über eine Teilbreite, insbesondere über die gesamte Breite der Motorhaube ist die Kanaltiefe gering, während bei einer geringen Ausdehnung der Kanalbreite die Kanaltiefe entsprechend größer ist. Damit kann der Kanalquerschnitt den vorgegebenen Bedingungen angepaßt werden.

In Weiterbildung der Erfindung bildet der Kanal zumindest teilweise die Oberseites der Motorhaube. Ist die Motorhaube auf ihrer Oberseite mit einer Ausbuchtung versehen, wird der Kanal von der Oberseite der Motorhaube und einer zusätzlichen Abdeckung gebildet.

In Weiterbildung der Erfindung reicht der Kanal vom Vorderende der Motorhaube bis in einen Bereich vor einer Fahrerkabine des Fahrzeuges. Als erfindungswesentlich ist im allgemeinen anzusehen, daß die Ansaugöffnung des Kanales in einem Bereich angeordnet ist, in dem eine unterhalb der Motorumgebungstemperatur liegende Temperatur herrscht. Dadurch ist die Zufuhr von ausreichend kalter Verbrennungsluft in vorteilhafter Weise gewährleistet. Dies ist beispielsweise dann der Fall, wenn die Ansaugöffnung des Kanales in einem Bereich angeordnet ist, in dem auch eine Kühleranordnung für den Motor des Fahrzeuges angeordnet ist.

In einer alternativen Ausgestaltung der Erfindung weist die Abdeckung für einen Motor, insbesondere eines land- oder bauwirtschaftlichen Fahrzeuges, zumindest ein Seitenteil auf, das erfindungsgemäß zur Zuführung von Verbrennungsluft für den Motor zumindest teilweise hohl ausgebildet ist und eine Ansaugöffnung aufweist. Aufgrund der seitlichen Zuführung von Verbrennungsluft für den Motor ist die Zufuhr von ausreichend kalter Verbrennungsluft gewährleistet, da die seitliche Umgebungstemperatur des Motors niedriger ist als die über dem Motor herrschende Temperatur. Dadurch verringert sich die Erwärmung der durch das hohl ausgebildete Seitenteil zugeführten Verbrennungsluft. Ein weiterer Vorteil besteht darin, daß das hohl ausgebildete Seitenteil die Geräuschemission des Motors reduziert.

In einer weiteren Ausgestaltung der Erfindung weist die Abdeckung für einen Motor, insbesondere eines land- oder bauwirtschaftlichen Fahrzeugs, zumindest ein einwandiges Seitenteil auf, wobei an dem Seitenteil separat ein Kanal mit einer Ansaugöffnung zur Zuführung von Verbrennungsluft angeordnet ist. Dies hat bei einer einwandigen Ausführung des Seitenteils den Vorteil, daß das Seitenteil einfach mit dem separat angeordneten Kanal ausgerüstet beziehungsweise nachgerüstet werden kann. Bei einer formschlüssigen Anordnung des Kanales an dem Seitenteil wird die Erwärmung der Verbrennungsluft reduziert und die Zufuhr von ausreichend kalter Verbrennungsluft gewährleistet. Dieser Vorteil ergibt sich ebenso durch die seitliche Anordnung des Kanales. Die Verringerung der Erwärmung kann dadurch gesteigert werden, daß der Kanal auf Distanz zu dem Seitenteil angeordnet wird. Darüber hinaus hat diese Anordnung den Vorteil, daß das verwendete Seitenteil, insbesondere ein Seitenteil aus der Serienfertigung, mit dem separaten Kanal versehenwird, so daß eine einfache und kostengünstige Fertigung des Seitenteils oder der gesamten Abdeckung gegeben ist. Weiterhin ist es denkbar, daß der Kanal in dem Seitenteil eingelassen ist. In einer besonderen Ausgestaltung bilden die Oberseite des Seitenteiles und die Oberseite des Kanales einegeschlossene Oberfläche. Dies hat den Vorteil, daß das derart ausgebildete Seitentei leicht zu reinigen ist und ein gefälliges Erscheinungsbild aufweist. Weiterhin ist es denkbar, den Kanal gegenüber dem Seitenteil mit einer Isolierung zu versehen. Neben dem Effekt, daß eine zusätzliche Geräuschdämmung des Motorgeräusches erreicht wird, ist dadurch eine zusätzliche Reduzierung der Aufheizung der Verbrennungsluft aufgrund der Motorumgebungstemperatur gegeben. In Weiterbildung der Erfindung erstreckt sich der Kanal zumindest über eine Teilhöhe des Seitenteils. Dadurch ist die Möglichkeit gegeben, den Kanalquerschnitt den konstruktiven Gegebenheiten der Abdeckung für den Motorraum und dem vorhandenen Raumangebotanzupassen. Bei einer entsprechend großen Ausdehnung des Kanales über eine Teilhöhe, insbesondere über die gesamte Höhe des Seitenteiles, ist beispielsweise die Kanal Hefe gering, während bei einer geringen Ausdehnung der Kanalhöhe die Kanaltiefe entsprechend größer ist.

In Weiterbildung der Erfindung erstreckt sich die hohle Ausbildung des Seitenteiles zumindest über eine Teilfläche des Seitenteiles, während die Restfläche des Seitenteiles einfach (einwandig) ausgebildet ist. Dies hat den Vorteil, daß nur eine solche Teilfläche des Seitenteiles hohl auszubilden ist, die für die ausreichende Zufuhr von Verbrennungsluft erforderlich ist. Ebenfalls ist eine Anpassung an die konstruktiven Gegebenheiten der Abdeckung sowie eine kostengünstige Fertigung möglich

In Weiterbildung der Erfindung ist der Kanal auf einer Teilfläche des Seitenteils angeordnet. Hier ist eben falls eine Anpassung an die konstruktiven Gegebenheiten der Abdeckung und eine Kostenreduzierung gegeben. Darüber hinaus ist zumindest ein weiterer Kanal längs des Kanales zur Zuführung von Verbrennungsluft angeordnet. Diese zusätzlichen Kanäle dienen der Belüftung der Fahrerkabine beziehungsweise der Aufnahme von Leitungen, wie zum Beispiel elektrischen oder hydraulischen Leitungen.

In Weiterbildung der Erfindung ist die Ansaugöffnung des hohl ausgebildeten Seitenteils beziehungsweise des Kanales der Motorhaube oder des Seitenteiles in einem Bereich angeordnet, in dem eine unterhalb der Motorumgebungstemperatur liegende Temperatur herrscht. Dadurch ist die Zufuhr von ausreichend kalter Verbrennungsluft in vorteilhafter Weise gewährleistet. Dies ist beispielsweise dann der Fall, wenn die Ansaugöffnung des hohl ausgebildeten Seitenteiles beziehungsweise des Kanales in einem Bereich angeordnet ist, in dem auch eine Kühleranordnung für den Motor des Fahrzeuges angeordnet ist. So zeigt in einer weiteren Ausgestaltung der Erfindung die Ansaugöffnung bei einem durch Räder angetriebenen Fahrzeug in Richtung einer Vorderachse des Fahrzeuges. Ist das Fahrzeug mit einem andersartigen Antrieb versehen (z. B. Kettenfahrzeug), zeigt die Ansaugöffnung in Richtung eines vorderen Endes des Fahrzeuges. Bei einem durch Räder angetriebenen landwirtschaftlichen Fahrzeug beispielsweise ist eine Kühleranordnung für den Motor in einem Bereichvor und über der Vorderachse des Fahrzeuges (in Fahrtrichtung gesehen) vorgesehen. Diese Anordnung wird von einem ersten Teil der Abdeckung (Motorhaube und Seitenteilen) abgedeckt, die verschwenkbar ist. Der im wesentlichen hinter der Vorderachse angeordnete Motor für das Fahrzeug mit weiteren Komponenten wie zum Beispiel Getriebe, Aufladeeinrichtung (Turbolader) oder Abgasanlage ist von einem zweiten Teil der Abdeckung abgedeckt, wobei dieser Teil der Abdeckung feststeht. Die beiden Seitenteile der Abdeckung sind ebenfalls abnehmbar oder feststehend. Das erfindungsgemäß hohl ausgebildete Seitenteil beziehungsweise der separat an dem einwandig ausgebildeten Seitenteil angeordnete Kanal erstreckt sich von einem Bereich, in dem eine Öffnung für die Ansaugluft für den Motor liegt, bis in den Bereich, in dem die Kühleranordnung vorgesehen ist. Durch die Anordnung der Ansaugöffnung in den Bereich, der nicht oder nur unwesentlich von der Motorumgebungstemperatur beeinflußt wird, ist die Zufuhr ausreichend kalter Verbrennungsluft gewährleistet. Bei dieser Ausgestaltung der Erfindung ist darüber hinaus die Anordnung der Ansaugöffnung am vordersten Ende des Fahrzeuges ebenfalls denkbar. Das hohl ausgebildete Seitentei beziehungsweise der separate Kanal an dem einwandigen Seitenteil kann auch an beiden Seiten des Motors vorgesehen werden.

In Weiterbildung der Erfindung ist die der Ansaugöffnung abgewandte Öffnung des Kanales über einen Querkanal, insbesondere unter Zwischenanordnung einer Filteranlage, mit einer Öffnung für die Ansaugluft für den Motor verbunden. Über diesen Querkanal ist der unterhalb der Motorhaube angeordnete Motor mit dem Kanal zur Zuführung von Verbrennungsluft verbunden. Zur Entkopplung von Schwingungen, die von dem Motor ausgehen, ist der Querkanal in vorteilhafter Weise dehnbar oder flexibel ausgebildet. Zur Reinigung der Verbrennungsluft ist vor oder hinter diesem Querkanal oder innerhalb des Querkanals eine ansich bekannter Filteranlage angeordnet.

In Weiterbildung der Erfindung ist zumindest ein weiterer Kanal zur Belüftung der Fahrerkabine und/oder zur Aufnahme von Leitungen längs des Kanales zur Zuführung von Verbrennungsluft angeordnet. Dies hat den Vorteil, daß neben dem erfindungsgemäßen Kanal zur Zuführung von Verbrennungsluft je nach Ausstattung des Fahrzeuges zusätzliche Kanäle angeordnet werden können. Diese dienen dann der Belüftung der Fahrerkabine beziehungsweise der Aufnahme von Leitungen wie zum Beispiel elektrischen oder hydraulischen Leitungen.

In allen Ausgestaltungen der Erfindung ist die Motorhaube zumindest teilweise zwischen einem Vorderende des Fahrzeuges und einem Bereich der Fahrerkabine angeordnet. Über diesen gesamten Bereich kann die Motorhaube ein- oder mehrteilig ausgebildet sein. Darüber hinaus kann die Motorhaube zumindest in Teilbereichen Seitenteile aufweisen, die fest mit der gesamten Motorhaube oder mit Teilbereichen der Motorhaube verbunden sind oder abnehmbar (zum Beispiel hochklappbar) sind. Die Motorhaube selbst oder Teile davon sind ebenfalls fest mit dem Fahrzeug verbunden oder abnehmbar.

Weitere Ausgestaltungen der Erfindung und Ausbildungen der erfindungsgemäßen Abdeckung sind im folgenden beschrieben und in den Zeichnungen gezeigt.

Es zeigen:
- Fig.1:: Querschnitte durch eine erfindungsgemäße Motorhaube,
- Fig.2:: Querschnitt durch eine weitere erfindungsgemäße Motorhaube,
- Fig.3:: Langsschnitt (ausschnittsweise) durch ein landwirtschaftliches Fahrzeug,
- Fig.4:: ein erfindungsgemäßes Seitenteil einer Abdeckung, das hohl ausgebildet ist,
- Fig.5:: ein erfindungsgemäßes Seitenteil einer Abdeckung, das einen Kanal aufweist,
- Fig.6:: ein Seitenteil und Motorhaube einer Abdeckung, ausgebildet für die Zufuhr von Verbrennungsluft,
- Fig.7:: beispielhafte Ausbildung eines Kanals.

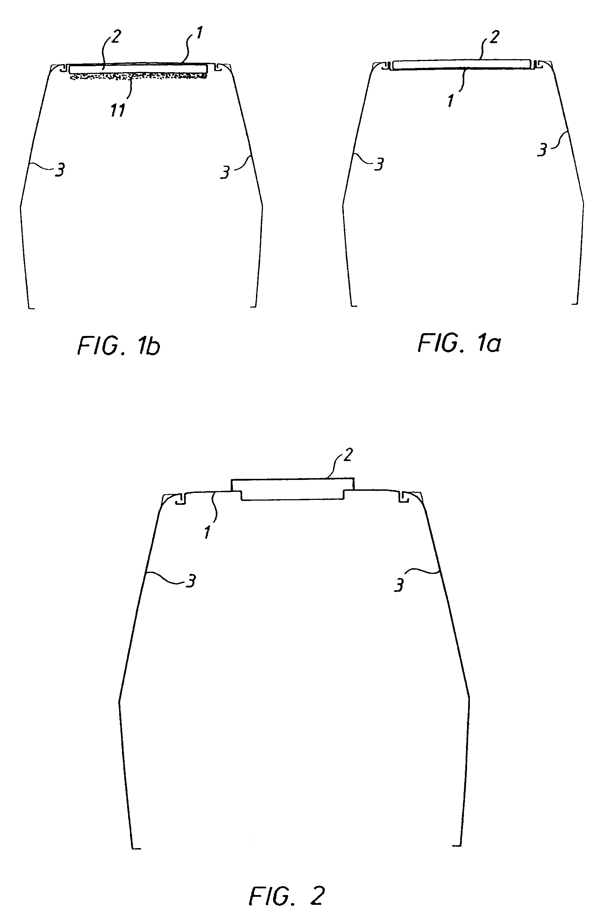

Fig.1a zeigt einen Querschnitt durch eine erfindungsgemäße Motorhaube. Die mit 1 bezeichnete Motorhaube weist an ihrer Oberseite eine Einbuchtung auf, wobei in dieser Einbuchtung separat ein Kanal 2 angeordnet ist. Breite, Höhe und Querschnitt des Kanales 2 sind variierbar und können den konstruktiven Gegebenheiten angepaßt werden. In dieser Ausbildung ist der Kanal 2 oberhalb der Oberseite der Motorhaube 1 angeordnet sein. Die Motorhaube 1 ist einschalig (beziehungsweise einwandig) ausgebildet. In einer besonderen Ausgestaltung der Erfindung bilden die Oberseite der Motorhaube und die Oberseite des Kanales 2 eine geschlossene Oberfläche, wie dies in Fig.1a gezeigt ist. Darüber hinaus kann zwischen der Oberseite der Motorhaube und der der Oberseite der Motorhaube 1 zugewandten Seite des Kanales 2 eine Isolierschicht (Dämmung) eingebracht werden. Der Kanal 2 ist kraft- oder formschlüssig mit der Motorhaube 1 verbunden. Dies kann beispielsweise durch Einpressen, Verkleben, Verschrauben oder anderen geeigneten Maßnahmen geschehen. Weiterhin ist die Motorhaube 1 mit Seitenteilen 3 versehen, die fest mit der Motorhaube 1 in Verbindung stehen oder abnehmbar sind. Die in Fig.1a gezeigten Seitenteile 3 sind beispielsweise durch eine Klemmvorrichtung mit der Motorhaube 1 verbunden und abnehmbar. Fig.1b zeigt eine alternative Ausbildung der erfindungsgemäßen Motorhaube 1. Die Motorhaube 1 weist an ihrer Unterseite eine Einbuchtung auf, wobei in dieser Einbuchtung separat der Kanal 2 angeordnet ist. In dieser Ausgestaltung sind ebenfalls Breite, Höhe und Querschnitt des Kanales 2 variierbar und können den konstruktiven Gegebenheiten angepaßt werden. Zur optimalen Isolierung des Kanales 2 gegenüber der Motorumgebungstemperatur ist der Kanal 2 an seiner Unterseite (die Seite, die dem Motor zugewandt ist) mit einer Isolierschicht 11 versehen.

Fig.2 zeigt einen Querschnitt durch eine weitere erfindungsgemäße Motorhaube. In dieser Fig.2 ist die Motorhaube 1 mit einer Einbuchtung über die gesamte Breite versehen und weist Seitenteile 3 auf, die abnehmbar sind. Der Kanal 2 wird gebildet durch eine beispielsweise U-förmige Abdeckung, die als separates Bauteil mit der Motorhaube 1 in Verbindung gebracht wird. Breite, Höhe und Querschnitt der Einbuchtung der Motorhaube 1 sowie der Abdeckung sind variierbar und können den konstruktiven Gegebenheiten angepaßt werden.

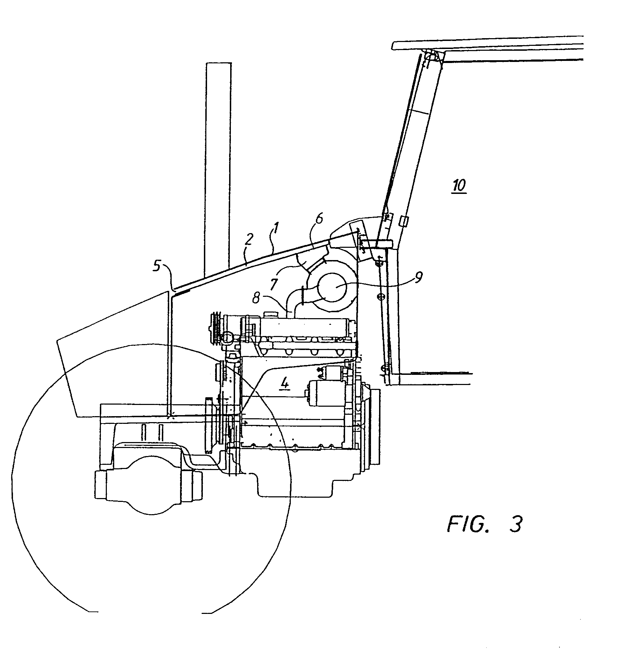

Fig.3 zeigt einen Längsschnitt (ausschnittsweise) durch ein landwirtschaftliches Fahrzeug. Ein zumindest für den Antrieb des Fahrzeuges vorgesehener Motor 4 wird zumindest in Teilbereichen von der Motorhaube 1 abgedeckt. In dieser Fig.3 ist die Motorhaube 1 zweigeteilt, wobei das dem Vorderende des Fahrzeuges zugewandte Teil der Motorhaube 1 einen Bereich abdeckt, in dem die gestrichelt gezeigte Kühleranordnung für den Motor 4 angeordnet ist. Der Kanal 2 ist in der Motorhaube 1 integriert. Eine Ansaugöffnung 5 des Kanales 2 befindet sich an der Trennstelle zwischen der feststehenden und der abnehmenden Motorhaube 1, das heißt, daß die Ansaugöffnung 5 in Fahrtrichtung bzw. in Richtung einer Vorderachse des Fahrzeuges zeigt. Die Verlegung des Kanales 2 zusätzlich in den Bereich des abnehmbaren Teiles der Motorhaube 1 oder die Verlegung des Kanales 2 über ein hohl ausgebildetes Seitenteil oder über ein mit einem weiteren Kanal versehenes Seitenteil in Richtung des Vorderendes des Fahrzeuges ist ebenfalls möglich. Eine der Ansaugöffnung 5 abgewandte Öffnung 6 des Kanales 2 ist über einen Querkanal 7 mit einer Öffnung 8 für die Ansaugluft für den Motor verbunden. Die der Ansaugöffnung 5 abgewandte Öffnung 6 liegt im wesentlichen in einem Bereich vor einer teilweise gezeigten Fahrerkabine 10 des Fahrzeuges, wobei der Fahrerkabine 10 über den Kanal 2 oder über weiteren in der Motorhaube 1 integrierten Kanal Frischluft zugeführt werden kann. Der Querkanal 7 weist darüber hinaus eine ansich bekannte Filteranlage 9 auf, die die an der Ansaugöffnung 5 angesaugte Verbrennungsluft filtert und reinigt. Eine Anbringung der Filteranlage 9 vor der Ansaugöffnung 5, direkt hinter der der Ansaugöffnung 5 abgewandten Öffnung 6 oder direkt vor der Öffnung 8 ist ebenfalls denkbar. In vorteilhafter Weise ist der Querkanal 7 zur Geräusch- und Schwingungsdämpfung dehnbar oder flexibel ausgebildet. Ist die Filteranlage 9 mit entsprechenden Anschlußstutzen ausgebildet, kann der Querkanal 7 entfallen.

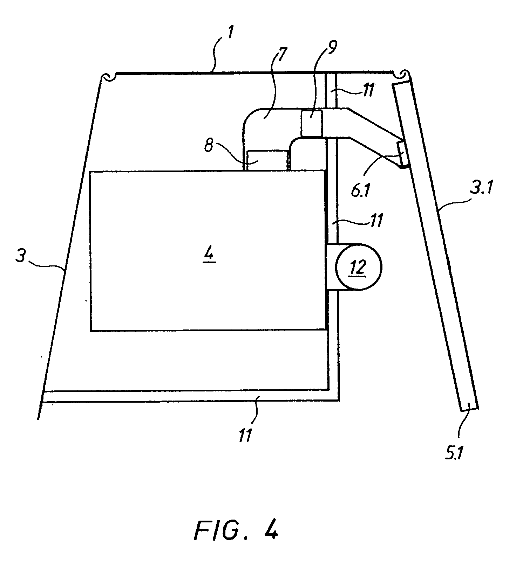

Fig. 4 zeigt ein erfindungsgemäßes Seitenteil, das hohl ausgebildet ist. Oberhalb des mit 4 bezeichneten Motors des Fahrzeuges ist die Motorhaube 1 angeordnet. An dieser Motorhaube 1 ist abnehmbar ein hohl ausgebildetes Seitenteil 3.1 angeordnet. Das Seitenteil 3.1 erstreckt sich zumindest über eine Teillange des Fahrzeuges. Das in Fig.4 gezeigte Seitenteil 3.1 weist eine Ansaugöffnung 5.1 auf, die sich in dieser Schnittzeichnung über den gesamten Querschnitt des Seitenteiles 3.1 erstreckt. Darüber hinaus sind Teilquerschnitte des Seitenteiles 3.1 sowie andersartige Öffnungen (zum Beispiel rund) für die Ansaugöffnung 5.1 denkbar. Weiterhin weist das Seitenteil 3.1 eine der Ansaugöffnung 5.1 abgewandte Öffnung 6.1 auf, die mit einem Querkanal 7 in Verbindung steht. Das der Öffnung 6.1 abgewandte Ende des Querkanales 7 ist mit einer Öffnung 8 für die Ansaugluft für den Motor 4 verbunden. Der Querkanal 7 weist darüber hinaus die an sich bekannte Filteranlage 9 auf, die die an der Ansaugöffnung 5.1 angesaugte Verbrennungsluft filtert und reinigt. Eine Anbringung der Filteranlage 9 vor der Ansaugöffnung 5.1, direkt hinter der der Ansaugöffnung 5.1 abgewandten Öffnung 6.1 oder direkt vor der Öffnung 8 ist ebenfalls denkbar. In vorteilhafter Weise ist der Querkanal 7 zur Geräusch- und Schwingungsdämpfung dehnbar oder flexibel ausgebildet. Ist die Filteranlage 9 mit entsprechenden Anschlußstutzen ausgebildet, kann der Querkanal 7 entfallen. Zur weiteren Geräuschreduzierung ist der Motor 4 mit Verkleidungen 11 versehen, die zur Durchführung des Querkanales 7 beziehungsweise einer mit 12 bezeichneten Abgasanlage versehen sind.

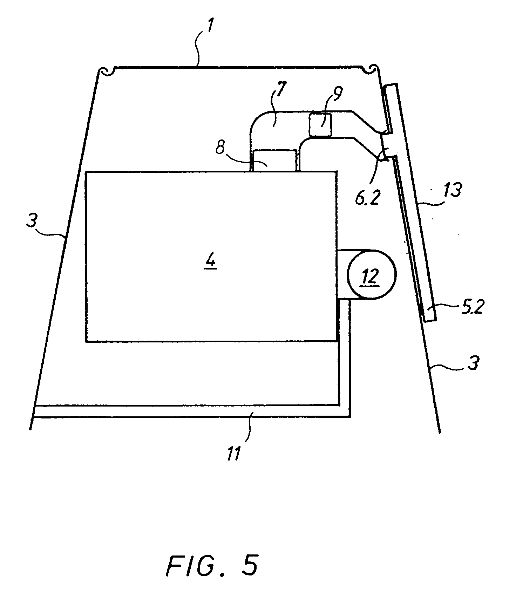

Fig.5 zeigt ein einwandig ausgebildetes Seitenteil, das einen Kanal aufweist. In einer weiteren Ausgestaltung der Erfindung besteht die Abdeckung des Motors 4 aus der Motorhaube 1 sowie aus den zwei einwandig ausgebildeten Seitenteilen 3. Auf zumindest einem der beiden Seitenteile 3 ist ein Kanal 13 angeordnet, der eine Ansaugöffnung 5.2 aufweist. Die Ansaugöffnung 5.2 des Kanales 13 ist analog zu der Ansaugöffnung 5.1 des hohl ausgebildeten Seitenteiles 3.1 ausgebildet. Der Kanal 13 ist mit einer der Ansaugöffnung 5.2 abgewandten Öffnung 6.2 versehen, an die sich der schon beschriebene Querkanal 7 mit der Filteranlage 9 anschließt. Über den Kanal 13, den Querkanal 7 sowie die Öffnung 8 wird dem Motor 1 ausreichend kalte Verbrennungsluft zugeführt.

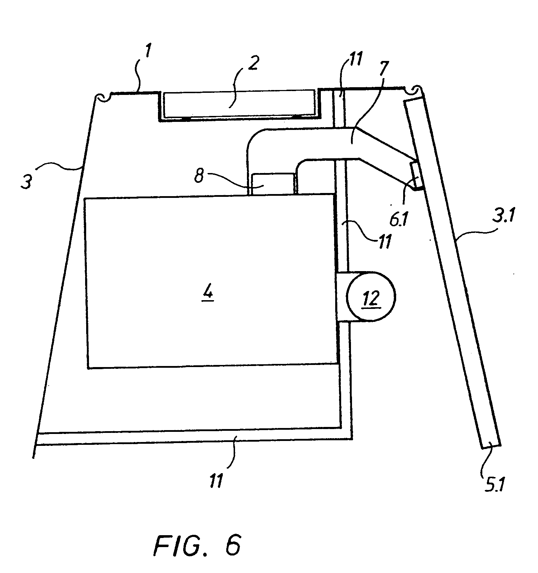

Fig.6 zeigt ein Seitenteil und eine Motorhaube der Abdeckung. Zusätzlich zu dem hohl ausgebildeten Seitenteil 3.1 ist die Motorhaube 1 mit einer Einbuchtung zur Aufnahme des Kanales 2 versehen. Somit ist es beispielsweise denkbar, daß über das Seitenteil 3.1 dem Motor 4 Verbrennungsluft zugeführt wird, während über den Kanal 2 Luft für die Frischluftzufuhr der Fahrerkabine des Fahrzeuges angesaugt wird. In einer besonderen Ausgestaltung der Erfindung liegen die Ansaugöffnungen des Seitenteiles 3.1 und des Kanales 2 im gleichen Bereich. Im Kanal 2 ist darüber hinaus die Verlegung von Leitungen denkbar.

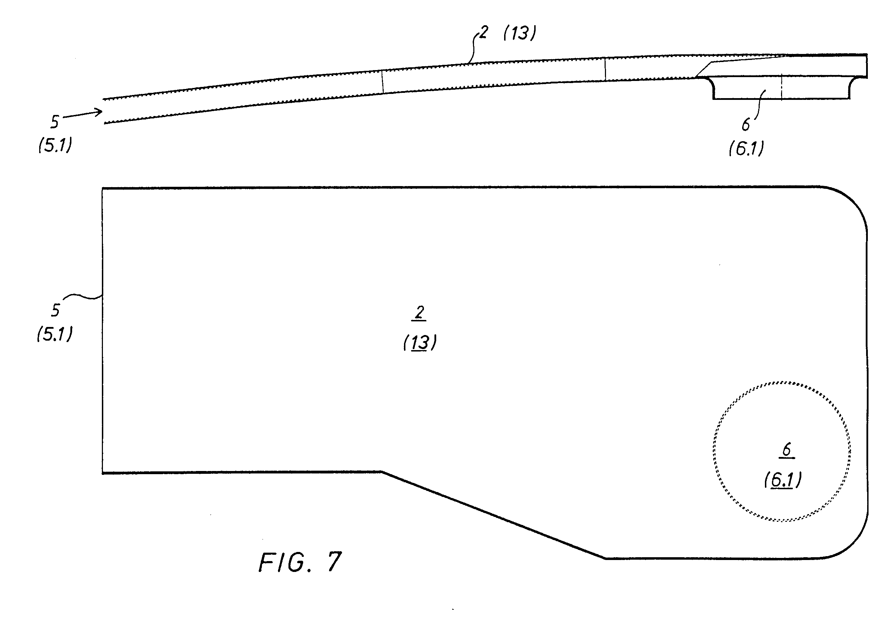

Fig. 7 zeigt eine beispielhafte Ausbildung des Kanales 2 bzw. 13. Der flache und als separates Bauteil in der Motorhaube 1 integrierbare Kanal 2 bzw. der auf dem Seitenteil 3.1 angeordnete Kanal 13 weist an einer Stirnseite die Ansaugöffnung 5 bzw. 5.1 auf. Auf der der Ansaugöffnung 5 bzw. 5.1 gegenüberliegenden Seite ist die Öffnung 6 bzw. 6.1 angeordnet, über die dem Motor Verbrennungsluft zugeführt wird. Die gezeigte geometrische Form des Kanales ist beispielhaft und kann in weiten Grenzen variiert werden und somit den konstruktiven Gegebenheiten angepaßt werden.

## Patentansprüche

1. Abdeckung für einen Motor, insbesondere für land- oder bauwirtschaftliche Fahrzeuge, mit zumindest einem Kanal zur Zuführung von Verbrennungsluft, wobei die Abdeckung zumindesteine Motorhaube aufweist,
*dadurch gekennzeichnet,* daß der Kanal (2) als separates Bauteil ausgebildet ist, das mit der Motorhaube (1) oder mit einem Teil der Motorhaube (1) verbunden ist.

2. Abdeckung nach Anspruch 1,
*dadurch gekennzeichnet,* daß der Kanal (2) auf der Motorhaube (1) angeordnet ist, bzw. in die Motorhaube (1) eingelassen ist.

3. Abdeckung nach Anspruch 2,
*dadurch gekennzeichnet*, daß die Oberseite der Motorhaube (1) und die Oberseite des Kanals (2) eine geschlossene Oberfläche bilden.

4. Abdeckung nach einem der vorhergehenden Ansprüche,
*dadurch gekennzeichnet*, daß der Kanal (2) gegenüber der Motorhaube (1) eine Isolierung aufweist.

5. Abdeckung nach einem der vorhergehenden Ansprüche,
*dadurch gekennzeichnet*, daß sich der Kanal (2) zumindest über eine Teilbreite der Motorhaube (1) erstreckt.

6. Abdeckung nach einem der vorhergehenden Ansprüche,
*dadurch gekennzeichnet*, daß der Kanal (2) zumindest teilweise die Oberseite der Motorhaube (1) bildet.

7. Abdeckung nach einem der vorhergehenden Ansprüche,
*dadurch gekennzeichnet*, daß der Kanal (2) vom Vorderende der Motorhaube (1) bis in einen Bereich vor einer Fahrerkabine (10) des Fahrzeuges reicht.

8. Abdeckung für einen Motor, insbesondere für land- oder bauwirtschaftliche Fahrzeuge, wobei die Abdeckung zumindest ein Seitenteil aufweist,
*dadurch gekennzeichnet*, daß das Seitenteil (3.1) zur Zuführung von Verbrennungsluft zumindest teilweise hohl ausgebildet ist und eine Ansaugöffnung (5.1) aufweist.

9. Abdeckung für einen Motor, insbesondere für land- oder bauwirtschaftlichen Fahrzeuges, wobei die Abdeckung zumindest ein Seitenteil aufweist,
*dadurch gekennzeichnet*, daß das Seitenteil (3) einwandig ausgebildet ist und daran separat ein Kanal (13) mit einer Ansaugöffnung (5.2) zur Zuführung von Verbrennungsluft angeordnet ist.

10. Abdeckung nach einem der vorhergehenden Ansprüche,
*dadurch gekennzeichnet*, daß sich die hohle Ausbildung des Seitenteiles (3.1) zumindest übereine Teilfläche des Seitenteiles (3.1) erstreckt und die Restfläche einfach ausgebildet ist.

11. Abdeckung nach einem der vorhergehenden Ansprüche,
*dadurch gekennzeichnet*, daß der Kanal (13) aufeiner Teilfläche des Seitenteiles (3) angeordnet ist.

12. Abdeckung nach einem der vorhergehenden Ansprüche, *dadurch gekennzeichnet,* daß die Ansaugöffnung (5) bzw. (5.1, 5.2) in einem Bereich angeordnet ist, in dem eine unterhalb der Motorumgebungstemperatur liegende Temperatur herrscht.

13. Abdeckung nach einem der vorhergehenden Ansprüche,
*dadurch gekennzeichnet,* daß eine der Ansaugöffnung (5) bzw. (5.1, 5.2) abgewandte Öffnung (6) bzw. (6.1, 6.2) des Kanales (2) bzw. (13) über einen Querkanal (7), insbesondere unter Zwischenanordnung einer Filteranlage (9), mit einer Öffnung (8) für die Ansaugluft für den Motor verbunden ist.

14. Abdeckung nach einem der vorhergehenden Ansprüche,
*dadurch gekennzeichnet,* daß zumindest ein weiterer Kanal zur Belüftung der Fahrerkabine und/oder zur Aufnahme von Leitungen längs des Kanales (2) bzw. (13) zur Zuführung von Verbrennungsluft angeordnet ist.
